Europäisches Patentamt

European Patent Office

Office européen des brevets

(11) Veröffentlichungsnummer: **0 413 111 B1**

(12) **EUROPÄISCHE PATENTSCHRIFT**

(45) Veröffentlichungstag der Patentschrift: **13.07.94**

(51) Int. Cl.5: **H01L 41/08**, H02N 2/00

(21) Anmeldenummer: **90111985.9**

(22) Anmeldetag: **25.06.90**

(54) **Ultraschall-Wanderwellenmotor mit zwei oder mehr Stufen.**

(30) Priorität: **16.08.89 DE 3927040**

(43) Veröffentlichungstag der Anmeldung:
**20.02.91 Patentblatt 91/08**

(45) Bekanntmachung des Hinweises auf die
Patenterteilung:
**13.07.94 Patentblatt 94/28**

(84) Benannte Vertragsstaaten:
**AT BE CH DE DK ES FR GB GR IT LI LU NL SE**

(56) Entgegenhaltungen:
**EP-A- 0 169 297**

**JEE JOURNAL OF ELECTRONIC ENGINEE-RING, vol. 24, no. 244, April 1987, TOKYO, JP, Seiten 76-80 ; Dr. Y. AKIYAMA : "Present State of Ultrasonic Motors in Japan"**

**PATENT ABSTRACTS OF JAPAN vol. 10, no. 170 (E-412)(2226), 17. Juni 1986 ; & JP-A-61 022 778**

**IEEE 1987 ULTRASONICS SYMPOSIUM PRO-CEEDINGS vol. 2, 14. Okfober 1987, Denver, Colorado, Seiten 747-756 ; R. INABA et al. : "Piezoelectric Ultrasonic Motor"**

(73) Patentinhaber: **Licentia Patent-Verwaltungs-GmbH**
**Theodor-Stern-Kai 1**
**D-60596 Frankfurt(DE)**

(72) Erfinder: **Hagedorn, Peter, Prof. Dr.**
**Haydnweg 12**
**D-6104 Seeheim-Jugenheim(DE)**
Erfinder: **Wallaschek, Jörg, Dr. Ing.**
**Gross-Zimmerner Strasse 8**
**D-6110 Dieburg(DE)**

(74) Vertreter: **Vogl, Leo, Dipl.-Ing.**
**Licentia**
**Patent-Verwaltungs-G.m.b.H.**
**Theodor-Stern-Kai 1**
**D-60596 Frankfurt (DE)**

**Beschreibung**

Die vorliegende Erfindung betrifft einen Ultraschall-Motor, bei dem ein Antriebsmoment mit Hilfe eines Ultraschalloszillators, z. B. eines Piezoelektrikums oder eines Magnetostriktionselementes, als Antriebselement erzeugt wird.

Piezoelektrische Motoren, wie sie z. B. aus der Anmeldung EP-A-0169297 bekannt sind, erzeugen Rotations- oder Linearbewegungen eines bewegbaren Teils durch in einer piezoelektrischen Keramik des Stators angeregte mechanische Wellen. Vorteile solcher Motoren sind u. a. die Möglichkeit hoher Drehmomente bei anwenderfreundlichen niedrigen Drehzahlen zu erzeugen, so daß ein Getriebe nicht erforderlich ist, ein kleines Bauvolumen mit geringem Gewicht und hoher Energiedichte sowie ein hohes Haltemoment in passivem Zustand.

Eine Darstellung des in einem piezoelektrischen Wanderwellenmotor verwendeten Antriebskonzeptes findet sich in einem Artikel im JEE (June 1986, p 66 - 70). Der in einem solchen Motor verwendete Schwingstator enthält eine kreisringförmige Piezokeramikscheibe , die mit Elektroden versehen und mit dem eigentlichen Schwingkörper verklebt ist. Zwei Arbeitselektroden zur einen Seite der Keramik bilden mit einem metallischen Schwingkörper, der zur anderen Seite der Keramik als Gegenelektrode wirkt, zwei getrennte Anregesysteme. Unter jeder der Arbeitselektroden befinden sich in der Keramik wechselweise unterschiedlich polarisierte Bereiche, die im weitesten Sinne mit der Polteilung konventioneller Motore vergleichbar sind.

Der Schwingstator steht unter achsialem Druck in Kontakt mit einem Rotor, der an der Kontaktfläche mit einem dünnen Belag aus geeignetem Kunststoff versehen ist.

Über die Elektroden wird die Piezokeramik mit hochfrequenter Wechselspannung so angeregt, daß im Stator mechanische Wanderwellen erzeugt werden. Als eigentlicher Schwingkörper wird ein Metallring oder eine kreisförmige Metallscheibe verwendet. Der Schwingkörper wird mit einer solchen Frequenz (Eigenfrequenz) angeregt, bei der sich die in der Piezokeramik polarisierte Anzahl radialer Knotengeraden, d. h. Geraden, auf denen die Auslenkung der Oberfläche Null ist, in der gewünschten Schwingungsform ausbildet. Da sich die einzelnen Oberflächenelemente näherungsweise auf elliptischen Trajektorien bewegen, entstehen aufgrund der Reibung zwischen Stator- und Rotoroberfläche in der kreisringförmigen Kontaktzone zwischen den beiden Oberflächen tangentiale Kräfte, die zur Ausbildung einer Drehbewegung und eines Drehmoments am Rotor führen, die an einer Achse abgenommen werden können.

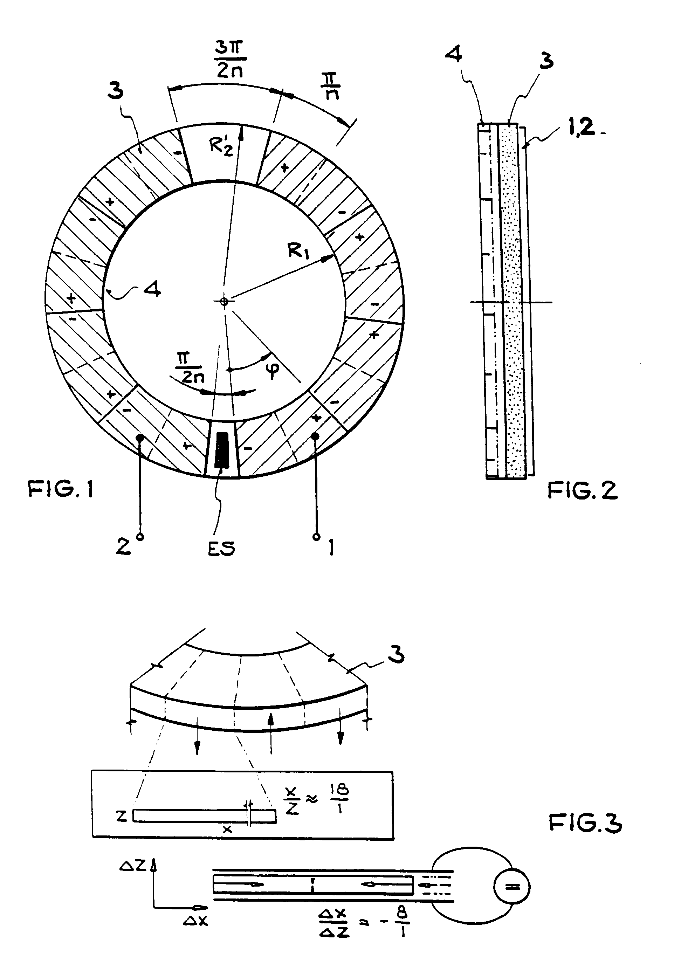

Die Figuren 1 und 2 zeigen die schematische Darstellung eines Schwingstators für einen piezoelektrischen Rotationsmotor mit den Arbeitselektroden 1 bzw. 2, unter denen jeweils positiv bzw. negativ polarisierte Bereiche der piezoelekrischen Keramik mit jeweils einem Winkelbereich von $\pi/n$ angeordnet sind, wobei im vorliegenden Fall n = 9 ist. Die von der Piezokeramik freien Winkelbereiche dienen zur sensorischen Erfassung von Motorzuständen, z. B. mittels einer Sensorelektrode ES. In Figur 2 ist illustriert, wie die Piezokeramik 3 zwischen den Arbeitselektroden 1, 2 und der durch den metallischen Schwingkörper 4 gebildeten Gegenelektrode angeordnet ist.

Die Figuren 3 - 5 veranschaulichen die Anregung von mechanischen Wellen im Stator mittels piezokeramischer Elemente. Figur 3 zeigt schematisch ein scheibenförmiges Piezokeramik-Segment mit einer Scheibendicke z und linearer Ausdehnung x. Bei typischen Piezokeramiken wie z. B. Bleizirkonat-Titanat findet man bei Anlage eines elektrischen Feldes senkrecht zur Scheibenoberfläche, wenn z klein gegenüber x ist, daß die piezoelektrische Deformation senkrecht zur Feldrichtung, d. h. in x-Richtung, um eine Größenordnung größer ist als parallel zur Feldrichtung. Dies führt dazu, daß bei einem Kreisringsegment die Deformation der Piezokeramik näherungsweise ausschließlich in Umfangsrichtung erfolgt.

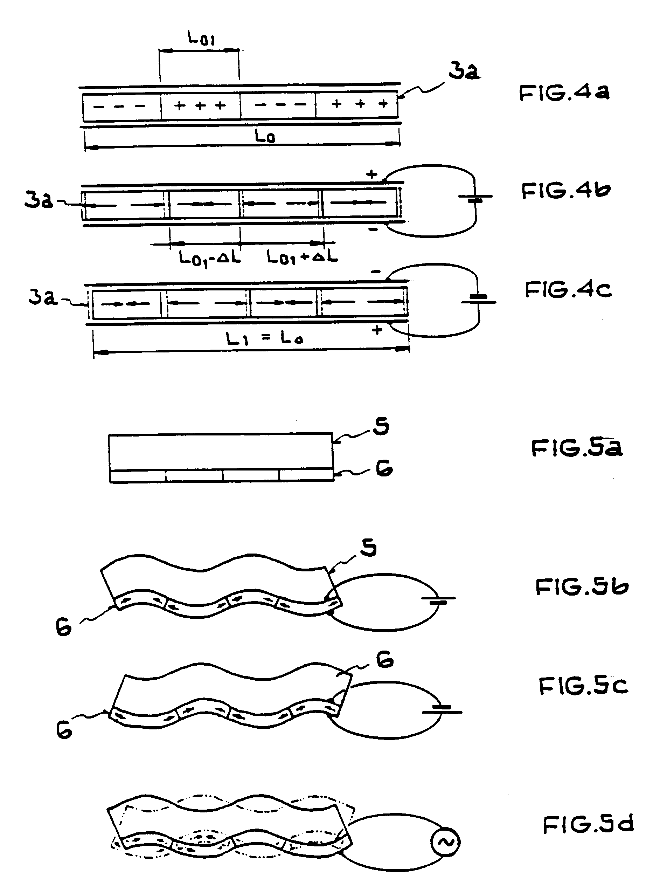

Figur 4a zeigt nun eine symmetrisch polarisierte Piezokeramik 3a der Länge $L_0$ mit insgesamt vier alternierend angeordneten positiv und negativ polarisierten Segmenten der jeweiligen Länge $L_0$. Wie Figur 4b zeigt, wird durch Anlage eines äußeren statischen elektrischen Feldes jedes der Segmente entsprechend seiner Polarisation zu einer Kontraktion bzw. Extension um einen Betrag $\Delta L$ veranlaßt. Die Umkehrung des elektrischen Feldes führt jeweils zu einem Wechsel zwischen Kontraktion und Dehnung bei den einzelnen Segmenten (Figur 4c). Da sich bei alternierender Polarisation und gleicher Anzahl positiver und negativer Segmente die Kontraktionen und Extension der Keramiksegmente in erster Ordnung näherungsweise kompensieren, verändert sich die Gesamtlänge der Piezokeramik bei angelegtem elektrischen Feld gegenüber dem feldfreien Fall nicht.

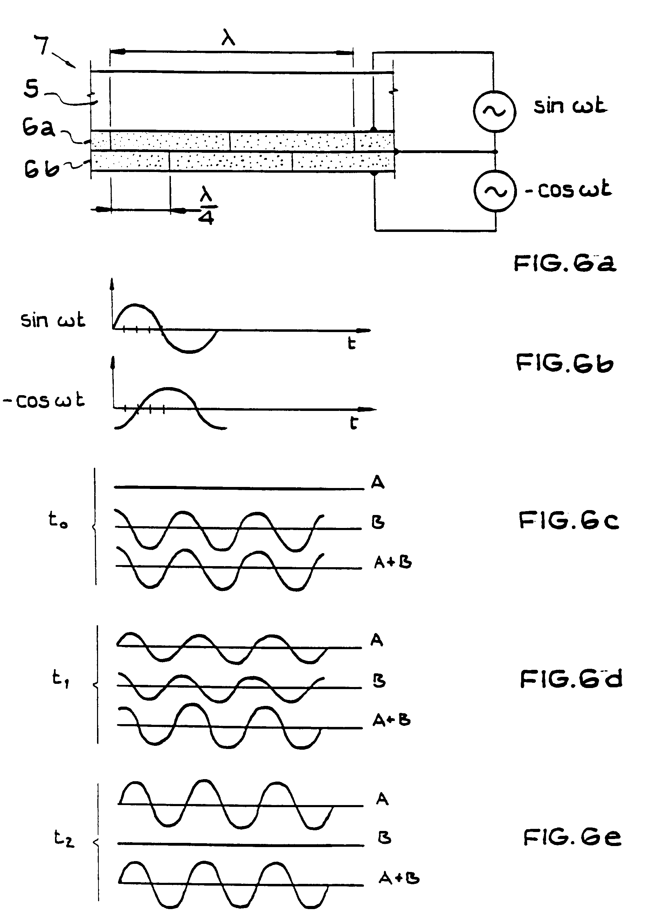

Figur 5a zeigt die schematische Darstellung eines Schwingstators, bestehend aus einem elastischen Körper 5 und einer mit diesem Körper verklebten symmetrisch polarisierten Piezokeramik 6.

Figur 5b zeigt, wie sich bei Anlage eines statischen elektrischen Feldes wegen der kraftschlüssigen Verbindung zwischen Piezokeramik 6 und elastischem Körper in der Oberfläche des letzteren im Bereich der Kontraktionszonen der Piezokeramik Wellenberge und im Bereich der Extensionszonen der Piezokera-

EP 0 413 111 B1

mik Wellentäler ausbilden. Die Umkehrung der Polarität des elektrischen Feldes führt zu einer Invertierung von Wellentälern und Wellenbergen, da die Kontraktionszonen Dilatationszonen und die Extensionszonen Kontraktionszonen werden, wie in Figur 5c gezeigt. Bei Anlegung einer sinusförmigen Wechselspannung führt jedes Segment mit der Periode der Wechselspannung Kontraktionen und Extensionen aus, so daß sich, wie in Figur 5d illustriert, stehende Wellen im Schwingstator ausbilden.

In den Figuren 6a - 6e ist die Erzeugung von Wanderwellen auf der Oberfläche 7 eines Schwingstators 5 durch Überlagerung von stehenden Wellen, die jeweils in zwei um $\lambda/4$ Wellenlänge gegeneinander versetzten Piezosystemen 6A und 6B erzeugt werden, gezeigt. Während Figur 6a die Konfiguration der Piezokeramiken 6A und 6B des Schwingstators 5 zeigen, illustrieren die Figuren 6b - 6e für verschiedene Zeitpunkte $T_0$, $T_1$, $T_2$ die Überlagerung A und B, der durch die sinus- und kosinusförmigen Anregungen (Figur 6b) erzeugten Schwingungszuständen A, B der Oberfläche 7 des Stators.

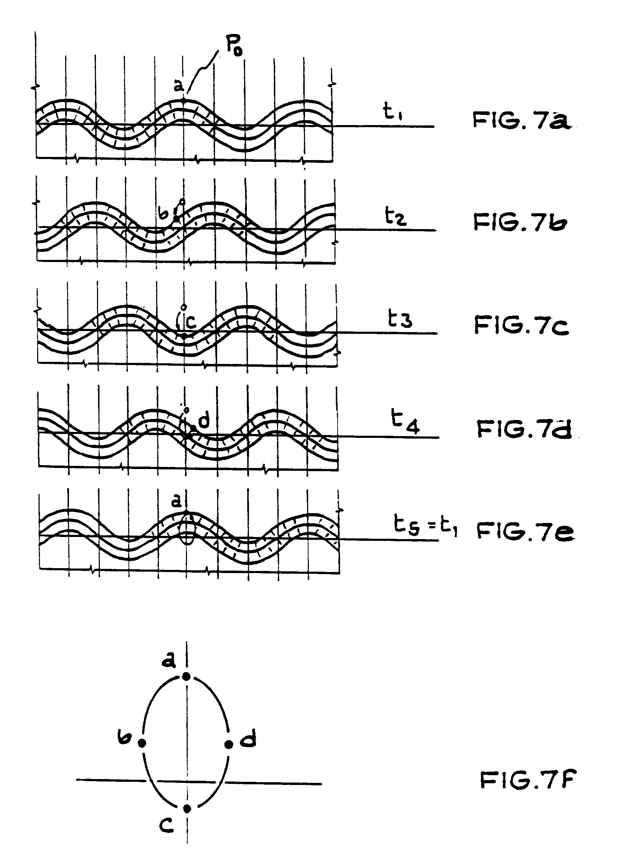

Die Bewegung eines Oberflächenpunktes $P_0$ des Schwingstators erfolgt dabei entlang einer elliptischen Bahn, die entgegengesetzt zur Ausbreitungsrichtung der Wanderwelle durchlaufen wird, wie in den Figuren 7a - 7f dargestellt ist.

Während im passiven Zustand Rotor und Stator mit ihrer Wirkungsoberfläche in vollflächigem Kontakt sind, reduziert sich die Kontaktfläche bei Anregung von Wanderwellen im Schwingkörper auf den Bereich der Schwingungsmaxima der Wanderwellen, wobei der durch Reibung an die Statoroberfläche gekoppelte Rotor entsprechend der Bewegung der Oberflächenpunkte entlang ihrer elliptischen Bahn, eine zur Ausbreitungsrichtung der Wanderwelle entgegengesetzte Bewegung ausführt.

Ein Nachteil der bekannten Ultraschall-Wanderwellenmotoren ist, daß sie stets mit nur einer bestimmten festen Schwingungsform der Wanderwellen, insbesondere einer festen Anzahl von Knotengeraden und Knotenkreisen, und zwar ausschließlich Null oder einem Knotenkreis, arbeiten.

Nicht berücksichtigt worden ist bisher auch, daß die im Stator angeregten Schwingungsformen der Wanderwellen nicht ausschließlich nach der Anzahl ihrer Knotengeraden zu klassifizieren sind, sondern zusätzliche Klassifizierungsmerkmale - im Falle einer rotationssymmetrischen Statorplatte die Anzahl der Knotenkreise - erfordern. Dementsprechend erfolgt auch die Steuerung dieser Motoren bei gleichbleibender Schwingungsform primär durch die Variation der Wanderwellen-Amplitude.

Die vorliegende Erfindung geht dagegen von der Erkenntnis aus, daß im Stator eines Ultraschallmotors unterschiedliche Schwingungsmoden - im Falle eines rotationssymmetrischen Stators klassifizierbar nach der Anzahl der Knotengeraden und Knotenkreise - angeregt und zur Beeinflussung dynamischer Eigenschaften, wie Drehgeschwindigkeit oder Drehmoment, verwendet werden können.

Insbesondere wird die Erkenntnis benutzt, daß durch geeignete Anregungssysteme bei einem rotationssymmetrischen Stator Wellenmoden mit verschiedenen Knotengeraden angeregt sowie daß die Lage der Kontaktzone zwischen Stator- und Rotoroberfläche bei Variation der Anzahl der Knotenkreise verändert und damit dynamische Größen wie die Drehgeschwindigkeit über sehr weite Bereiche variiert werden können.

Aufgabe der vorliegenden Erfindung ist die Angabe eines Verfahrens zum Betrieb eines Ultraschallmotors mit verschiedenen Wanderwellenmoden sowie eines Ultraschallwanderwellenmotors mit mehreren Übersetzungsstufen.

Die Aufgabe wird erfindungsgemäß durch die Merkmale der Ansprüche 1 und 6 gelöst. Weitere vorteilhafte Ausbildungen der Erfindung sind den Unteransprüchen zu entnehmen.

Die Erfindung wird im folgenden mit Hilfe von Zeichnungen bevorzugter Ausführungsformen genauer charakterisiert.

| | |
|---|---|
| Figur 1 | zeigt die Konfiguration der Piezokeramik für den Stator eines Ultraschallmotors |
| Figur 2 | zeigt einen Querschnitt durch den Stator eines Ultraschallmotors |
| Figur 3 | zeigt die Deformation eines Piezoelements bei Anlage eines elektrischen Feldes |
| Figur 4 | zeigt die Wirkung eines elektrischen Feldes auf einer aus vier Segmenten bestehenden symmetrisch polarisierte Piezokeramik |
| Figur 5 | zeigt die Anregung von stehenden Wellen in einer Piezokeramik |
| Figur 6 | zeigt die Anregung von Wanderwellen in einer Piezokeramik |
| Figur 7 | zeigt die Bewegung eines Oberflächenpunktes des Schwingstators bei Anregung von Wanderwellen |
| Figur 8 | zeigt eine Ausführungsform des erfindungsgemäßen Motors mit drei Übersetzungsstufen |
| Figur 9 | zeigt die Konfiguration der Piezokeramik des erfindungsgemäßen Motors für den Betrieb mit $n = 9$ und $n = 4$ Knotengeraden |
| Figur 10 | zeigt ein Schnittbild eines Statorelements mit piezokeramischer Randschicht |
| Figur 11 | zeigt Kraft-, Momenten- und Spannungskomponenten in einem Element nach Figur 10 |
| Figur 12 | zeigt eine Wellenmode des freien Stators mit $n = 9$ Knotengeraden und Null Knotenkreisen |
| Figur 13 | zeigt einen Radialschnitt einer Wellenmode mit $n = 9$ Knotengeraden und null, einem und |

3

zwei Knotenkreisen.

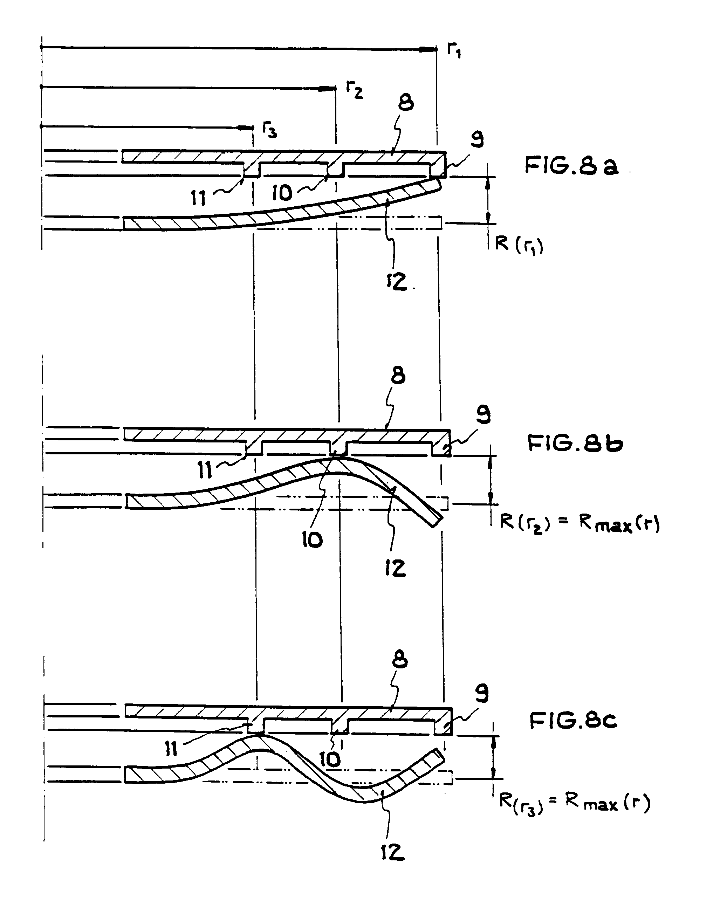

Die Figuren 8a - 8c zeigen Querschnittsdarstellungen eines erfindungsgemäßen Ultraschall-Motors, der mit drei Übersetzungsstufen arbeitet. Hierzu weist der scheibenförmige Rotor 8 drei kreisringförmige Erhöhungen 9, 10 und 11 mit den jeweiligen Radien $r_1$, $r_2$ und $r_3$ auf. Im Stator 12, der in der Abbildung lediglich schematisch als Platte dargestellt ist, werden Wanderwellen mit unterschiedlicher Anzahl an Knotenkreisen angeregt. In Figur 8a ist im Radialschnitt eine Mode ohne Knotenkreis gezeigt. Die maximale Auslenkung R ($r_1$) des Stators 12 erfolgt am Rand in einem radialen Abstand $r_1$ vom Scheibenzentrum, so daß Rotor und Stator im wesentlichen nur im Bereich der Erhöhung 9 in Kontakt sind. Figur 8b zeigt den Motor bei Anregung einer Mode mit einem Knotenkreis. Die maximale Statorauslenkung sowie der Kontakt zwischen Stator und Rotor erfolgt hier im Bereich des radialen Abstandes $r_2$.

Analog ist in Figur 8c der Motor bei Anregung einer Mode mit zwei Knotenkreisen und einer Kontaktfläche zwischen Rotor und Stator im Bereich des radialen Abstandes $r_3$ dargestellt.

Die Berührradien $r_1$, $r_2$ und $r_3$ zwischen Rotor und Stator werden durch die Moden und Eigenfrequenzen des Stators bestimmt. Der Motor wird dabei im allgemeinen mit einer äußeren Anregungsfrequenz nahe einer Eigenfrequenz des freien Stators betrieben. Durch Übergang von einer Anregungsfrequenz $\Omega_1$ zu einer Frequenz $\Omega_2$ wird ein Übergang von einer Übersetzungsstufe mit Berührradius $r_1$ zu einer zweiten Stufe mit Radius $r_2$ bewirkt.

Bei einer weiteren Ausführungsform des erfindungsgemäßen Motors weist analog zu Figuren 8a - 8c der Stator im Bereich der maximalen Schwingungsauslenkungen, z. B. $r_1$, $r_2$ und $r_3$ Erhöhungen, z. B. in der Form einer Zahnung auf.

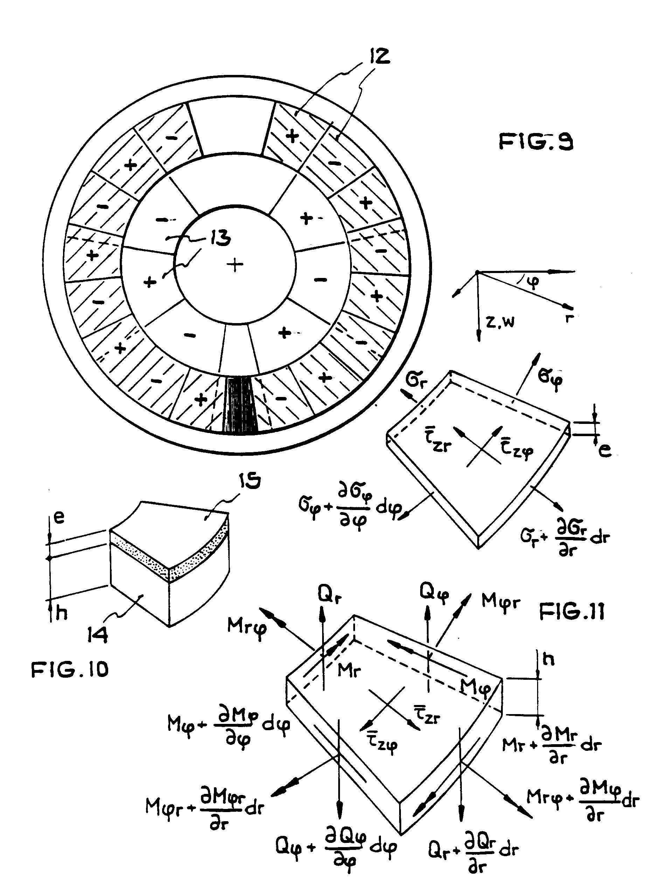

Eine alternative Ausführungsform des erfindungsgemäßen Motors arbeitet mit zwei oder mehr Wanderwellenmoden, die sich jeweils in der Anzahl der Knotengeraden unterscheiden. Hierfür zeigt Figur 9 die Anordnung von zwei Keramikschichten 12 und 13 für die Anregung von zwei Wanderwellenmoden mit $n = 9$ bzw. $n = 4$ Knotengeraden. Die kreisringförmigen Schichten 12 und 13 können dabei in Ebenen übereinander und durch eine elastische Zwischenschicht miteinander verbunden oder konzentrisch zueinander in einer gemeinsamen Ebene angeordnet sein. Der Betrieb des Motors in einer Mode mit einer gewünschten Anzahl von Knotengeraden erfolgt bei dieser Ausführungsform des Motors einfach dadurch, daß jeweils nur die betreffende Keramikschicht über ihre Arbeitselektroden angesteuert wird, während die jeweils andere Schicht passiv bleibt.

Eine weitere Ausführungsform des erfindungsgemäßen Motors, die mit Wanderwellenmoden mit unterschiedlicher Anzahl von Knotengeraden und Knotenkreisen arbeitet, besteht aus einer Kombination der in den Figuren 8 und 9 gezeigten Ausführungsformen. Die jeweils gewünschte Betriebsmode ergibt sich bei dieser Ausführungsform dadurch, daß jeweils die der gewünschten Anzahl an Knotengeraden entsprechende Keramikschicht mit der dem gewünschten Berührradius bzw. Anzahl an Knotenkreisen entsprechenden Frequenz $\Omega$ angesteuert wird.

Für die Steuerung eines erfindungsgemäßen Motors kann verwendet werden, daß bei äußerer Anregung des kreisplattenförmigen Stators durch eine Zwangserregung der Form

$$q(r,\varphi,t) \sim \overline{R}(r)\left\{\cos n\varphi \, \cos \Omega t + \sin n\varphi \, \sin \Omega t\right\}; \quad \overline{R}(r)=\begin{cases} 1 \, ; \, r \in [r_1,r_2] \\ 0 \, ; \, r \notin [r_1,r_2] \end{cases}$$

in der Nähe der Statorresonanzfrequenz $\Omega$
die Winkelgeschwindigkeit des Rotors $\omega_R$ im stationären Betrieb näherungsweise über

$$\omega_R = \frac{-a \cdot \Omega}{r^2} \, n \cdot R(r)$$

mit dem effektiven Abstand a der Statoroberfläche in Ruhelage von der Stator-Mittelebene, Schwingungskreisfrequenz $\Omega$ der Wanderwelle, der Anzahl n der Knotengeraden der Mode, dem Berührradius r und der Schwingungsamplitude R (r) verknüpft ist. Es ist ersichtlich, daß durch Übergang von einer Wellenmode zur anderen direkt zwischen verschiedenen Geschwindigkeiten $\omega_R$ umgeschaltet werden kann.

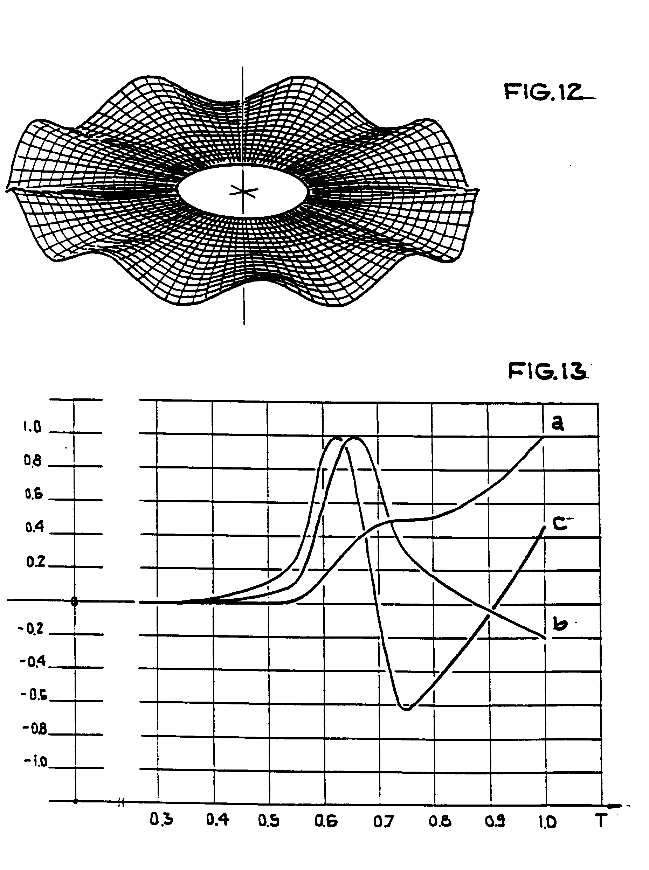

Die Anregung unterschiedlicher Schwingungsmoden im Stator und die angegebene Formel für die Rotorgeschwindigkeit $\omega_R$ kann bei einfacher Statorgeometrie aus der mit Hilfe der Figuren 10 und 11 herleitbaren Bewegungsgleichung für die Auslenkung w der Statoroberfläche verstanden werden. Figur 10 zeigt dazu das Schnittbild eines Kreisscheibenelementes der Höhe h mit aufgeklebter piezokeramischer Randschicht 9 und der Dicke e. Die im Flächenelement 14 unter der Randschicht 15 wirkenden Kräfte und Momente sind in Figur 11 dargestellt, wobei wegen der Kreissymmetrie Polarkoordinaten r , $\phi$ gewählt wurden. Die Schubspannungen in der Verklebung sind mit $\bar{\tau}$ , die Querkraft pro Einheitslänge mit Q, das Moment pro Einheitslänge mit M und die Normalspannung mit $\sigma$ bezeichnet.

Mit Hilfe der in Figur 11 dargestellten Beziehungen und aus der Kontinuumsmechanik bekannter Prinzipien erhält man als Bewegungsgleichung für die ungedämpfte Biegung w der Platte in z-Richtung näherungsweise

$$\rho h \ddot{w} + \Delta (D \Delta w) - (1-\nu)\left[D_{,rr}\left(\tfrac{1}{r} W_{,r} + \tfrac{1}{r^2} W_{,\varphi\varphi}\right) + \tfrac{1}{r} D_{,r} W_{,rr}\right] + f(\bar{\tau}) = q(r,\varphi,t)$$

wobei $\rho$ die Massendichte, $\nu$ die Poisson'sche Querkontraktionszahl, D die Biegesteifigkeit, q(r, $\phi$ ,t) die äußere Anregungsfunktion und $f$ eine Funktion der Schubspannung $\tau$ in der Klebeschicht bezeichnet und zur Vereinfachung hier auf die Diskussion der zugehörigen Randbedingungen verzichtet wird.

Eine genauere Untersuchung dieser partiellen Differentialgleichung zeigt, daß bei radialsymmetrischen Platten für geeignete Anfangsbedingungen Wanderwellen als Lösungen auftreten, die nach Knotengeraden und Kreisen klassifizierbar sind.

Figur 12 zeigt die aus einer numerischen Lösung der oben angebenen Gleichung erhaltene Eigenschwingungsform mit n = 9 Knotengeraden.

Bei mechanischer Ankopplung an einen Rotor muß die Bewegungsgleichung noch um Terme ergänzt werden, die die durch den Energietransport zum Rotor eingeführte Dämpfung berücksichtigen. Die oben angeführte Formel für die Winkelgeschwindigkeit $\omega_R$ erhält man dann unter der Voraussetzung eines schlupffreien Kontaktes zwischen Rotor und Statoroberfläche bei äußerer Anregung in der Nähe der Eigenfrequenzen (Resonanznähe) durch eine Zwangserregung der Form

$$q(r,\phi,t) \sim [\cos n\phi \, \cos \Omega t + \sin n\phi \, \sin \Omega t]\bar{R}(r).$$

Figur 13 zeigt den aus einer numerischen Lösung der Bewegungsgleichung erhaltenen Radialschnitt einer Schwingungsform mit neun Knotengeraden für die dimensionslosen Eigenfrequenzen a: 77.62, b: 133.65 und c: 193.09 und null bzw. einem bzw. zwei Knotenkreisen. Um die physikalischen Eigenkreisfrequenzen zu erhalten, müssen die dimensionslosen Eigenfrequenzen noch mit einem von den Abmessungen des Stators und dem Werkstoff abhängigen Faktor multipliziert werden.

## Patentansprüche

1. Verfahren zum Betrieb eines Ultraschallmotors, bestehend aus einem Stator aus einem elastischen Material, der einen oder mehrere Ultraschalloszillatoren zur Anregung von Wanderwellen aufweist, und einem Rotor, wobei Stator und Rotor jeweils in einem Oberflächenbereich unter Druck miteinander in Kontakt stehen, **dadurch gekennzeichnet**, daß zum Antrieb des Rotors mit mehreren Übersetzungsstufen Wanderwellenmoden unterschiedlicher Schwingungsform angeregt werden.

2. Verfahren nach Anspruch 1, dadurch gekennzeichnet, daß zum Antrieb des Rotors in der Statoroberfläche Wanderwellenmoden mit einer festen Anzahl von Knotengeraden und einer variablen Anzahl an Knotenkreisen angeregt werden.

3. Verfahren nach Anspruch 1, dadurch gekennzeichnet, daß zum Antrieb des Rotors in der Statoroberfläche Wanderwellenmoden mit einer festen Anzahl an Knotenkreisen und einer variablen Anzahl an Knotengeraden angeregt werden.

4. Verfahren nach Anspruch 1, dadurch gekennzeichnet, daß zum Antrieb des Rotors in der Statoroberfläche Wanderwellenmoden mit einer variablen Anzahl an Knotengeraden und einer variablen Anzahl an Knotenkreisen angeregt werden.

5. Verfahren nach Anspruch 3 oder 4, dadurch gekennzeichnet, daß mehrere Ultraschalloszillatoren vorgesehen sind, wobei jeder Ultraschalloszillator Wanderwellenmoden mit jeweils einer festen Anzahl an Knotengeraden anregt.

6. Ultraschallmotor, bestehend aus einem Stator aus einem elastischen Material, der einen oder mehrere Ultraschalloszillatoren zur Anregung von Wanderwellen aufweist, und einem Rotor, wobei Stator und Rotor jeweils in einem Oberflächenbereich unter Druck miteinander in Kontakt stehen, **dadurch gekennzeichnet**, daß in der Rotor- oder Statoroberfläche zum Antrieb des Rotors mit mehreren Übersetzungsstufen im Bereich der maximalen Schwingungsauslenkung von verschiedenen anregbaren Wanderwellenmoden Erhöhungszonen als Kontaktflächen vorgesehen sind.

7. Ultraschallmotor nach Anspruch 6, dadurch gekennzeichnet, daß die Ultraschalloszillatoren scheibenförmig ausgebildet und schichtweise übereinander angeordnet und durch elastische Zwischenschichten miteinander verbunden sind.

8. Ultraschallmotor nach Anspruch 6 oder 7, dadurch gekennzeichnet, daß die Ultraschalloszillatoren konzentrisch zueinander angeordnet sind.

9. Ultraschallmotor nach Anspruch 8, dadurch gekennzeichnet, daß die Erhöhungszonen in der Rotor- oder Statoroberfläche kreisringförmig ausgebildet sind.

**Claims**

1. Method of operating an ultrasonic motor, consisting of a stator of a resilient material, which comprises one or more ultrasonic oscillators for excitation of progressive waves, and a rotor, wherein stator and rotor are in contact with each other under pressure in a respective surface region, characterised thereby, that progressive wave modes of different oscillatory form are excited for drive of the rotor with several transmission steps.

2. Method according to claim 1, characterised thereby that progressive wave modes with a fixed number of nodal lines and a variable number of nodal circles are excited in the stator surface for drive of the rotor.

3. Method according to claim 1, characterised thereby that progressive wave modes with a fixed number of nodal circles and a variable number of nodal lines are excited in the stator surface for drive of the rotor.

4. Method according to claim 1, characterised thereby that progressive wave modes with a variable number of nodal lines and a variable number of nodal circles are excited in the stator surface for drive of the rotor.

5. Method according to claim 3 or 4, characterised thereby that several ultrasonic oscillators are provided, wherein each ultrasonic oscillator excites progressive wave modes each with a fixed number of nodal lines.

6. Ultrasonic motor, consisting of a stator of a resilient material, which comprises one or more ultrasonic oscillators for excitation of progressive waves, and a rotor, wherein stator and rotor are in contact with each other under pressure in a respective surface region, characterised thereby that, for drive of the rotor with several transmission steps, zones of elevation are provided as contact surfaces in the rotor surface or stator surface in the region of the maximum oscillation deflection of progressive wave modes which are differently excitable.

7. Ultrasonic motor according to claim 6, characterised thereby that the ultrasonic oscillators are constructed in disc shape and are arranged in layers one above the other and connected together by resilient intermediate layers.

**8.** Ultrasonic motor according to claim 6 or 7, characterised thereby that the ultrasonic oscillators are arranged concentrically to one another.

**9.** Ultrasonic motor according to claim 8, characterised thereby that the zones of elevation in the rotor surface or stator surface are constructed to be circularly annular.

**Revendications**

**1.** Procédé pour faire fonctionner un moteur à ultrasons, comprenant un stator fait d'un matériau élastique et présentant un ou plusieurs oscillateurs à ultrasons pour exciter des ondes progressives, de même qu'un rotor, procédé dans lequel le stator et le rotor sont en contact l'un avec l'autre, sous une pression, dans une zone de surface, caractérisé en ce que, pour l'entraînement du rotor avec plusieurs étages de rapports de transmission, des modes d'ondes progressives de différentes formes de vibration sont excités.

**2.** Procédé selon la revendication 1, caractérisé en ce que, pour l'entraînement du rotor, des modes d'ondes progressives, ayant un nombre fixe de droites nodales et un nombre variable de cercles nodaux, sont excités dans la surface du stator.

**3.** Procédé selon la revendication 1, caractérisé en ce que, pour l'entraînement du rotor, des modes d'ondes progressives, ayant un nombre fixe de cercles nodaux et un nombre variable de droites nodales, sont excités dans la surface du stator.

**4.** Procédé selon la revendication 1, caractérisé en ce que, pour l'entraînement du rotor, des modes d'ondes progressives, ayant un nombre variable de droites nodales et un nombre variable de cercles nodaux, sont excités dans la surface du stator.

**5.** Procédé selon la revendication 3 ou 4, caractérisé en ce que plusieurs oscillateurs à ultrasons sont prévus, chaque oscillateur excitant des modes d'ondes progressives ayant chaque fois un nombre fixe de droites nodales.

**6.** Moteur à ultrasons, comprenant un stator fait d'un matériau élastique et présentant un ou plusieurs oscillateurs à ultrasons pour exciter des ondes progressives, de même qu'un rotor, le stator et le rotor étant en contact l'un avec l'autre, sous pression, dans une zone de surface, caractérisé en ce que, pour l'entraînement du rotor avec plusieurs étages de rapports de transmission dans la région de la déviation ou du déplacement de vibration maximal de différents modes d'ondes progressives susceptibles d'être excités, des zones surélévées sont prévues en tant que faces de contact dans la surface du rotor ou du stator.

**7.** Moteur à ultrasons selon la revendication 6, caractérisé en ce que les oscillateurs à ultrasons sont réalisés sous la forme de disques et sont superposés à la façon de coucbes en étant reliés entre eux par des couches intermédiaires élastiques.

**8.** Moteur à ultrasons selon la revendication 6 ou 7, caractérisé en ce que les oscillateurs à ultrasons sont disposés concentriquement l'un par rapport à l'autre.

**9.** Moteur à ultrasons selon la revendication 8, caractérisé en ce que les zones surélevées de la surface du rotor ou du stator sont en forme de couronne circulaire.

FIG.1

FIG.2

FIG.3

$L_{01}$

$L_0$

FIG.4a

3a

3a

$L_{01}-\Delta L$    $L_{01}+\Delta L$

FIG.4b

3a

$L_1 = L_0$

FIG.4c

5

6

FIG.5a

5

6

FIG.5b

6

6

FIG.5c

FIG.5d

FIG.6a

FIG.6b

FIG.6c

FIG.6d

FIG.6e

FIG. 7a

FIG. 7b

FIG. 7c

FIG. 7d

FIG. 7e

FIG. 7f

FIG.8a

FIG.8b

FIG.8c

FIG. 9

FIG. 10

FIG. 11

FIG.12

FIG.13

14